(19) Europäisches Patentamt

European Patent Office

Office européen des brevets

(11) **EP 2 806 549 A1**

(12) **EUROPEAN PATENT APPLICATION**

(43) Date of publication:
   **26.11.2014 Bulletin 2014/48**

(51) Int Cl.:
   ***H02M 3/158*** (2006.01)

(21) Application number: **13168560.4**

(22) Date of filing: **21.05.2013**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(71) Applicant: **GE Energy Power Conversion
   Technology Ltd
   Rugby
   Warwickshire CV21 1BU (GB)**

(72) Inventors:
   • **Banham-Hall, Dominic David
     Northampton NN7 2HZ (GB)**
   • **Butcher, Martin Samuel
     Rugby, Warwickshire CV22 7EW (GB)**

(74) Representative: **Serjeants LLP
   25 The Crescent
   King Street
   Leicester, LE1 6RX (GB)**

(54) **Control methods for power converters**

(57)     A method of operating a power converter arrangement is described. The power converter arrangement includes a dc link (2) and a dc load/source (4) such as a battery. An active rectifier/inverter (20) having dc terminals (24a, 24b) is connected to the dc link (2) and is adapted to provide a variable dc link voltage $V_1$ between maximum and minimum limits. An interleaved buck (or step down) converter (1) having a plurality of converter circuits is connected between the dc link (2) and the dc load/source (4). Each converter circuit includes a first switch ($6_1$, $6_2$, $6_3$), a second switch ($8_1$, $8_2$, $8_3$) and a reactor ($10_1$, $10_2$, $10_3$). The power converter arrangement is controlled according to a method where one or more null values of dc link voltage are determined with reference to the voltage $V_2$ across the dc load/source (4). If a null value of dc link voltage is between the maximum and minimum limits, the active rectifier/inverter (20) is controlled (e.g., by a controller (30)) to provide a dc link voltage that is substantially the same as the null value of dc link voltage.

Figure 2

EP 2 806 549 A1

**Description**

Technical Field

The present invention relates to control methods for power converters, and in particular to control methods that minimise current ripple.

Background Art

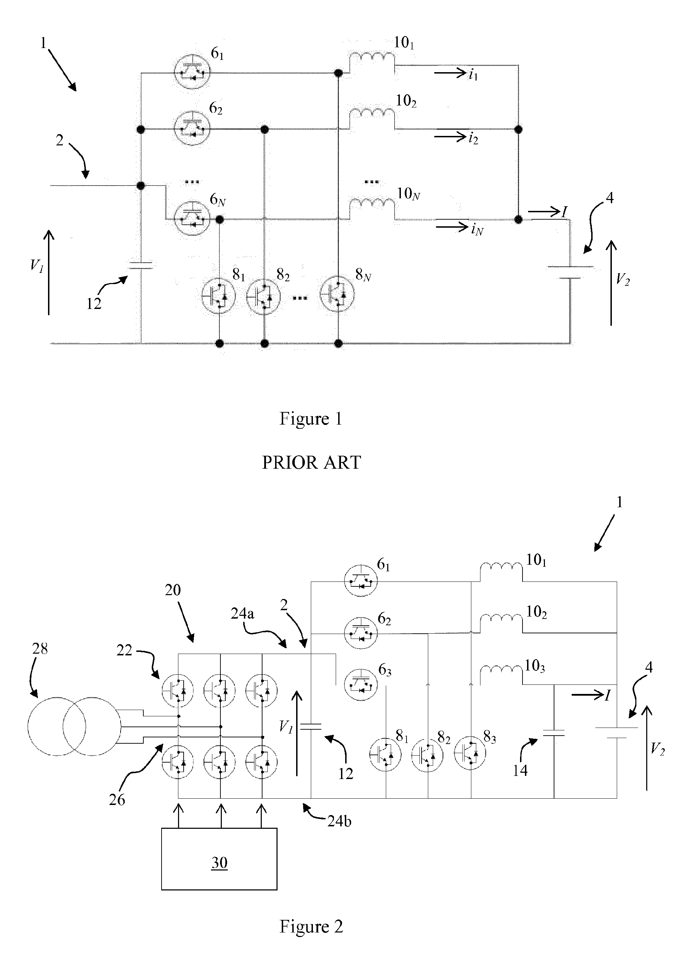

Figure 1 shows an *N*-phase interleaved bi-directional buck converter (or step-down converter) topology. Such a converter 1 consists of *N* converter circuits connected in parallel between a dc link 2 and a dc load/source 4. Each converter circuit has a synchronous topology with a first switch $6_1$, $6_2$...$6_N$, a second switch $8_1$, $8_2$...$8_N$ and a reactor (or inductor) $10_1$, $10_2$...$10_N$. In other words, a first converter circuit (or 'phase') of the buck converter 1 includes a first switch $6_1$, a second switch $8_1$ and a reactor $10_1$; a second converter circuit includes a first switch $6_2$, a second switch $8_2$ and a reactor $10_2$; and so on for each converter circuit.

A capacitor 12 is connected across the dc link 2.

It will be readily appreciated that because the buck converter is bi-directional, power can flow from the dc link 2 to the dc load/source 4 and power can flow from the dc load/source 4 to the dc link 2 depending on operational requirements.

The switching strategies of the individual converter circuits are interleaved. In other words, the converter circuits operate with the same duty ratio but the start points of their respective switching periods are time displaced by:

$$t_{start,n} = T \cdot \frac{n-1}{N} \qquad (EQ1)$$

where:

$n$ is the respective converter circuit (i.e., $n$=1, 2...$N$),
$t_{start.n}$ is the time displacement for the respective converter circuit, and
$T$ is the switching period.

The change in the current through each reactor (the so-called circuit current) during the 'on' period of the first switches $6_1$, $6_2$...$6_N$ is given by:

$$V_1 - V_2 = L \cdot \frac{\Delta i_n}{D \cdot T} \qquad (EQ2)$$

where:

$V_1$ is the dc link voltage (i.e., the voltage across the dc link 2),
$V_2$ is the voltage across the dc load/source 4,
$L$ is the reactor inductance,
$i_n$ is the circuit current for the respective converter circuit, and
$D$ is the duty ratio.

Likewise, the change in circuit current $i_n$ during the 'off' period of the first switches $6_1$, $6_2$...$6_N$ is given by:

$$-V_2 = L \cdot \frac{\Delta i_n}{(1-D) \cdot T} \qquad (EQ3)$$

In continuous operation, the increase in circuit current $i_n$ during the 'on' period must match the decrease in circuit current during the 'off' period so that the circuit current never falls to zero. Hence:

$$(V_1 - V_2) \cdot D \cdot T = V_2 \cdot (1 - D) \cdot T \qquad (EQ4)$$

$$V_1 \cdot D = V_2 \qquad (EQ5)$$

The rate of change of circuit current $i_n$ for each converter circuit during an 'on' period of the first switches $6_1$, $6_2...6_N$ is given by:

$$\frac{di_n}{dt} = \frac{V_1 - V_2}{L} = \frac{V_1 \cdot (1 - D)}{L} \qquad (EQ6)$$

Likewise, the rate of change of circuit current $i_n$ for each converter circuit during an 'off' period of the first switches $6_1$, $6_2...6_N$ is given by

$$\frac{di_n}{dt} = \frac{-V_2}{L} = \frac{-D \cdot V_1}{L} \qquad (EQ7)$$

For an $N$-phase interleaved bi-directional buck converter as shown in Figure 1 then the total rate of change of converter current $I$ is given by:

$$\frac{dI}{dt} = \sum_{1}^{N} \frac{di_n}{dt} \qquad (EQ8)$$

In the case where the duty ratio is low, e.g., where $D \leq 1/N$, given the circuit interleaving, there can only be a maximum of one converter circuit at any particular time that is 'on' (or charging) and the remaining converter circuits must be 'off' (or discharging).
In this situation the total rate of change of converter current $I$ is given by:

$$\frac{dI}{dt} = \frac{V_1 \cdot (1 - D)}{L} - (N - 1) \cdot \frac{D \cdot V_1}{L} \qquad (EQ9)$$

which simplifies to:

$$\frac{dI}{dt} = \frac{V_1}{L} - \frac{N \cdot D \cdot V_1}{L} \qquad (EQ10)$$

Therefore, the rate of change of converter current $I$ will be zero, provided that:

$$1 = N \cdot D \qquad (EQ11)$$

A higher duty ratio can be defined by:

$$\frac{a-1}{N} < D \leq \frac{a}{N} \qquad (EQ12)$$

where $a$ is a positive integer less than $N$.

In this situation, $a$ converter circuits can be 'on' (or charging) at any particular time and ($N-a$) converter circuits can be 'off' (or discharging). The total rate of change of converter current $I$ is given by:

$$\frac{dI}{dt} = a \cdot \frac{V_1 \cdot (1-D)}{L} - (N-a) \cdot \frac{D \cdot V_1}{L} \qquad (EQ13)$$

which simplifies to:

$$\frac{dI}{dt} = \frac{a \cdot V_1}{L} - \frac{N \cdot D \cdot V_1}{L} \qquad (EQ14)$$

Therefore, the rate of change of converter current $I$ will be zero, provided that:

$$a = N \cdot D \qquad (EQ15)$$

Summary of the Invention

The present invention provides a method of operating a power converter arrangement comprising: a dc link; a dc load/source; an active rectifier/inverter having dc terminals connected to the dc link and adapted to provide a variable dc link voltage ($V_1$) between maximum and minimum limits ($V_{1,max}$, $V_{1,min}$); and an interleaved buck (or step-down) converter having $N$ converter circuits connected between the dc link and the dc load/source, each converter circuit including a first switch, a second switch and a reactor; the method comprising the steps of:

determining one or more null values of dc link voltage $V_{1,null}$ with reference to the voltage $V_2$ across the dc load/source according to the equation:

$$V_{1,null} = V_2 \cdot \frac{N}{a} \qquad (EQ16)$$

where:

$N$ is a positive integer greater than or equal to 2, and
$a$ is a positive integer less than $N$; and
if a null value of dc link voltage is between the maximum and minimum limits of the dc link voltage, controlling the active rectifier/inverter to provide a dc link voltage that is substantially the same as the null value of dc link voltage.

If the active rectifier/inverter is controlled to provide a dc link voltage that is substantially the same as a null value of dc link voltage then there will be substantially no ripple on the converter current, i.e., the current experienced by the dc load/source will be substantially ripple-free. In a conventional power converter arrangement the active rectifier/inverter is normally controlled to provide a substantially constant dc link voltage. In the present method, the dc link voltage can be varied deliberately (e.g., by a controller for the active rectifier/inverter) in response to changes in the voltage $V_2$ across the dc load/source in order to try and minimise current ripple.

If there are two or more null values of dc link voltage between the maximum and minimum limits, the active rectifier/inverter can be controlled to provide a dc link voltage that is substantially the same as any of the null values. However, the highest null value will typically be selected because this lowers the dc link current and reduces losses in the power converter arrangement.

In some situations there may be no null value between the maximum and minimum limits of the dc link voltage. This will depend on the prevailing voltage $V_2$ across the dc load/source, the particular power converter arrangement (e.g., the number of interleaved buck converter circuits), as well as the operational constraints on the dc link voltage. The prevailing voltage $V_2$ is likely to depend upon the particular type of dc load/source. If there is no null value between the maximum and minimum limits, the method may further comprise the step of controlling the active rectifier/inverter to provide a dc link voltage that is substantially the same as the maximum or minimum limit of the dc link voltage. Although in this situation current ripple cannot be substantially eliminated, it will be readily appreciated that controlling the active rectifier/inverter to provide a dc link voltage that is substantially the same as the maximum or minimum limit reduces the current ripple as much as possible while still keeping the dc link voltage within its practical and operational constraints. If appropriate, the selection between the maximum or minimum limit can be based on whichever is closer to a null value and hence will provide the least current ripple. In other words, the active rectifier/inverter can be controlled to provide a dc link voltage that is substantially the same as whichever of the maximum and minimum limit will provide the least current ripple for the prevailing voltage $V_2$. The maximum limit can also be selected in preference to the minimum limit because this lowers the dc link current and reduces losses in the power converter arrangement.

The present invention further provides a power converter arrangement comprising: a dc link; a dc load/source; an active rectifier/inverter having dc terminals connected to the dc link and adapted to provide a variable dc link voltage between maximum and minimum limits; an interleaved buck (or step-down) converter having $N$ converter circuits connected between the dc link and the dc load/source, each converter circuit including a first switch, a second switch and a reactor; and a controller for the active rectifier/inverter adapted to implement the method described above.

The active rectifier/inverter can have any suitable topology and include any suitable power semiconductor switching devices, optionally controlled using a pulse width modulation (PWM) strategy. For example, the active rectifier/inverter can have a two- or three-level topology as appropriate.

Drawings

Figure 1 shows an $N$-phase interleaved bi-directional buck converter;
Figure 2 shows a power converter arrangement according to the present invention; and
Figures 3 and 4 show simulated results for the power converter arrangement of Figure 2.

Figure 2 shows a power converter arrangement according to the present invention where an $N$-phase interleaved bi-directional buck converter 1 is combined with an AC/DC converter, e.g., an active rectifier/inverter 20. (The buck converter 1 is generally as described above with reference to Figure 1 and like parts have been given the same reference numeral.) In this case the buck converter 1 is a three-phase converter 1 (i.e., where $N$=3) and the dc load/source 4 can be a dc energy store such as a battery that can be charged and discharged.

A smoothing capacitor 14 is connected in parallel across the dc load/source 4.

The buck converter 1 operates as a DC/DC converter.

The active rectifier/inverter 20 includes a plurality of switches 22 that are typically controlled to open and close in accordance with a pulse width modulation (PWM) strategy. The active rectifier/inverter 20 is controlled by a controller 30 which provides gate command signals for opening and closing the switches 22. The active rectifier/inverter 20 includes dc terminals 24a, 24b that are connected to the dc link 2 of the buck converter 1 and ac terminals 26 that are connected to an ac network or grid 28. Power can be supplied from the ac network 28 to the dc load/source 4 to charge the dc load/source and in this case the active rectifier/inverter 20 will operate as an active rectifier. Power can be discharged from the dc load/source 4 to the ac network 28 and in this case the active rectifier/inverter 20 will operate as an inverter.

It will be readily appreciated that the active rectifier/inverter 20 can be operated to control the dc link voltage $V_1$. The applicant has found that the dc link voltage $V_1$ can be varied deliberately by the controller 30 with reference to the voltage $V_2$ in order to minimise the ripple on the converter current $I$.

If equations EQ5 and EQ15 are combined then:

$$V_1 = V_2 \cdot \frac{N}{a} \qquad\qquad\qquad (EQ17)$$

where:

N is the total number of interleaved converter circuits, and

a is a positive integer less than N.

If the dc link voltage $V_1$ is controlled to satisfy equation EQ17 then current ripple can be substantially eliminated. This provides significant technical advantages for certain types of dc load/source, e.g., for batteries where current ripple can cause additional heating and an associated lifetime loss.

For the power converter arrangement shown in Figure 2 (i.e., where N=3) then there will be substantially no ripple on the converter current I if the dc link voltage $V_1$ is controlled to be $3V_2$ (i.e., where a=1) or $3V_2/2$ (i.e., where a=2). These values of dc link voltage are referred to herein as null values and can also be considered in terms of null values of the duty cycle D of the buck converter 1. The null values of dc link voltage can be determined (e.g., by the controller 30) for each value of a and with reference to the prevailing voltage $V_2$ as shown in equation EQ16. The active rectifier/inverter 20 can then be controlled to provide a dc link voltage $V_1$ that is substantially the same as a null value. The active rectifier/inverter 20 can be controlled in this manner irrespective of whether it is operating as an active rectifier or an inverter. The buck converter 1 is controlled in a conventional manner to supply power from the dc link 2 to the dc load/source 4 or to supply power from the dc load/source to the dc link depending on whether the dc load/source 4 is being charged or discharged.

In a practical power converter arrangement then the dc link voltage $V_1$ will often be constrained to be within maximum and minimum limits. If there is no null value within the maximum and minimum limits then the ripple current cannot be substantially eliminated, but merely minimised as far as possible by controlling the active rectifier/inverter 20 to provide a dc link voltage $V_1$ that is substantially the same as one of the maximum and minimum limits, typically the limit that is closest to a null value of the dc link voltage or which minimises losses in the power converter arrangement. It will be understood that this still provides a useful improvement over the conventional power converter arrangement where the dc link voltage $V_1$ remains substantially constant.

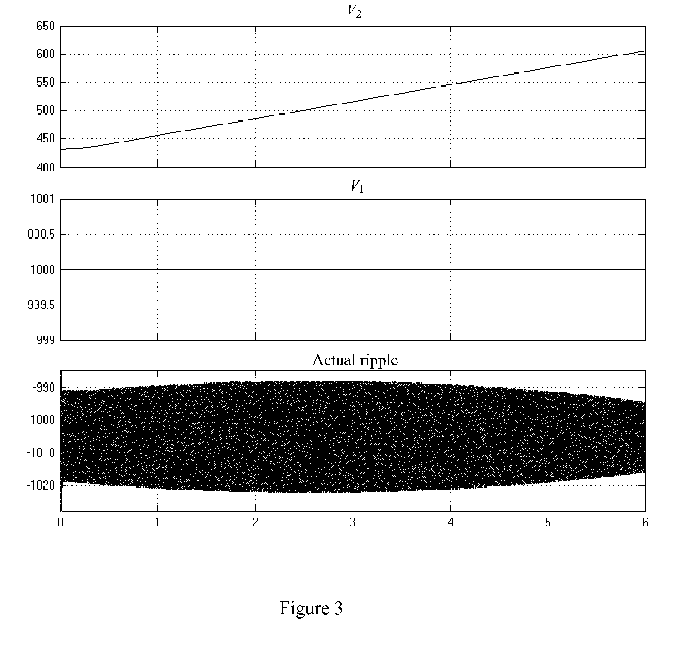

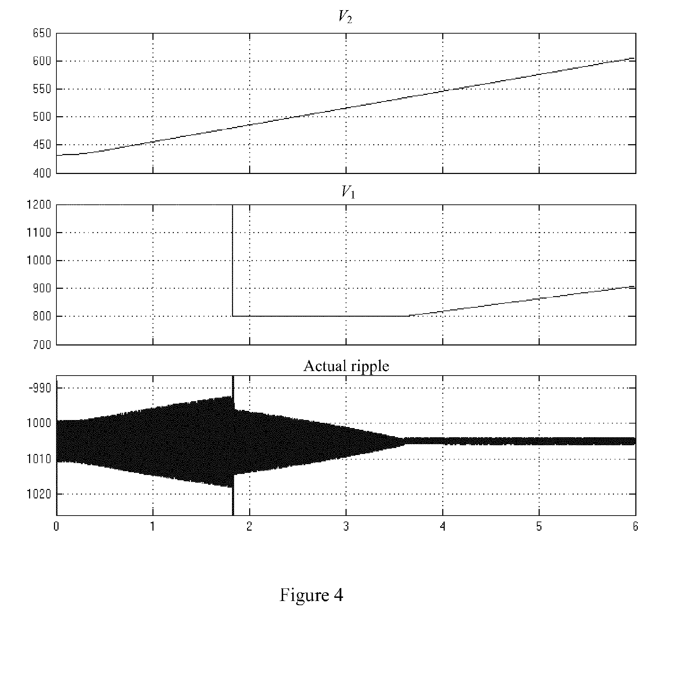

Figures 3 and 4 show simulated results for the power converter arrangement of Figure 2.

In Figure 3 the power converter arrangement is controlled in a conventional manner such that the dc link voltage $V_1$ remains substantially constant.

In Figure 4 the power converter arrangement is controlled according to the method of the present invention such that the dc link voltage $V_1$ is varied deliberately to minimise current ripple. The simulated parameters include a maximum limit for the dc link voltage $V_1$ so that the rated voltage of the dc link capacitor 12 is not exceeded, and a minimum limit so that the dc link voltage is always higher than the peak of the grid-side ac waveform. More particularly, the dc link voltage $V_1$ is not allowed to rise above 1200 V (i.e., $V_{1,max}$ = 1200 V) or fall below 800 V (i.e., $V_{1,min}$ = 800 V).

The upper plot of Figures 3 and 4 illustrates a situation where the voltage $V_2$ across the dc load/source 4 increases at a constant rate from 430 V to 600 V. The lower plot of Figures 3 and 4 illustrates current ripple.

In Figure 3 the middle plot illustrates how the dc link voltage $V_1$ remains substantially constant at 1 kV.

In Figure 4 the middle plot illustrates how the dc link dc link voltage $V_1$ is varied deliberately by the controller 30 for the active rectifier/inverter 20 in order to minimise the current ripple.

Initially, the voltage $V_2$ is 430 V which gives upper and lower null values for the dc link voltage at 1290 V (i.e., where a=1) and 645 V (i.e., where a=2), respectively. The dc link voltage $V_1$ cannot be set to either of these null values because they are both outside the maximum and minimum limits. The active rectifier/inverter 20 is therefore controlled to provide a dc link voltage $V_1$ at the maximum limit of 1200 V.

The dc link voltage $V_1$ remains constant at the maximum limit of 1200 V and the current ripple gradually increases as the voltage $V_2$ increases. This is because the dc link voltage $V_1$ gradually gets further away from the upper null value for the prevailing voltage $V_2$.

Eventually, as the voltage $V_2$ increases, it is better for the dc link voltage $V_1$ to be at the minimum limit of 800 V. The active rectifier/inverter 20 is therefore controlled to switch the dc link voltage $V_1$ from the maximum limit of 1200 V to the minimum level of 800 V.

The active rectifier/inverter 20 is controlled to maintain the dc link voltage $V_1$ constant at the minimum limit of 800 V and the current ripple gradually decreases as the voltage $V_2$ increases. This is because the dc link voltage $V_1$ gradually gets closer to the lower null value for the prevailing voltage $V_2$.

When the voltage $V_2$ reaches 533 V the upper and lower null values for the dc link voltage are 1599 V (i.e.,

where $a$=1) and 800 V (i.e., where $a$=2), respectively. The upper null value of 1599 V is still outside the maximum and minimum limits. However, the lower null value of 800 V is at the minimum limit for the dc link voltage $V_1$. As the voltage $V_2$ increases further, the lower null value for $a$=2 will be within the maximum and minimum limits and the active rectifier/inverter 20 is therefore controlled to provide a dc link voltage $V_1$ that is substantially the same as the lower null value for the prevailing voltage $V_2$ (i.e., where $V_1$=3$V_2$/2). It can be seen that the dc link voltage $V_1$ will increase in step with the gradually increasing voltage $V_2$. Ripple on the converter current $I$ is minimised and remains substantially constant.

In general terms, for the power converter arrangement shown in Figure 2 and the maximum and minimum limits of dc link voltage $V_1$ mentioned above, current ripple can be substantially eliminated for voltages $V_2$ between 267 V and 400 V (i.e., where $a$=1) and between 533 V and 800 V (i.e., where $a$=2). The dc load/source 4 can be selected to operate substantially at voltages within one (or both) of these ranges. For voltages $V_2$ outside these ranges then the active rectifier/inverter 20 can only be controlled to set the dc link voltage $V_1$ to either the maximum or minimum limits so that the current ripple is minimised as far as possible.

The current ripple illustrated in Figure 4 simulates a power converter arrangement where the reactors $10_1$, $10_2$ and $10_3$ of the buck converter 1 have ideal characteristics. However, the reactors will have stray (or parasitic) resistances that can have an affect on the current ripple that can actually be achieved in practice.

**Claims**

1.  A method of operating a power converter arrangement comprising:

    a dc link (2);
    a dc load/source (4);
    an active rectifier/inverter (20) having dc terminals (24a, 24b) connected to the dc link (2) and adapted to provide a variable dc link voltage ($V_1$) between maximum and minimum limits; and
    an interleaved buck converter (1) having $N$ converter circuits connected between the dc link (2) and the dc load/source (4), each converter circuit including a first switch ($6_1$, $6_2$, $6_3$), a second switch ($8_1$, $8_2$, $8_3$) and a reactor ($10_1$, $10_2$, $10_3$);
    the method comprising the steps of:

    determining one or more null values of dc link voltage $V_{1,null}$ with reference to the voltage $V_2$ across the dc load/source (4) according to the equation:

    $$V_{1,null} = V_2 \cdot \frac{N}{a}$$

    where:

    $N$ is a positive integer greater than or equal to 2, and
    $a$ is a positive integer less than N; and
    if a null value of dc link voltage is between the maximum and minimum limits of the dc link voltage, controlling the active rectifier/inverter (20) to provide a dc link voltage that is substantially the same as the null value of dc link voltage.

2.  A method of operating a power converter arrangement according to claim 1, further comprising the step of:

    if there are two or more null values of dc link voltage between the maximum and minimum limits, controlling the active rectifier/inverter (20) to provide a dc link voltage that is substantially the same as the highest null value.

3.  A method of operating a power converter arrangement according to claim 1 or claim 2, further comprising the step of:

    if no null value of dc link voltage is between the maximum and minimum limits, controlling the active rectifier/inverter (20) to provide a dc link voltage that is substantially the same as the maximum or minimum limit of the dc link voltage.

4.  A power converter arrangement comprising:

a dc link (2);
a dc load/source (4);
an active rectifier/inverter (20) having dc terminals (24a, 24b) connected to the dc link (2) and adapted to provide a variable dc link voltage ($V_1$) between maximum and minimum limits;
an interleaved buck converter (1) having $N$ converter circuits connected between the dc link (2) and the dc load/source (4), each converter circuit including a first switch ($6_1$, $6_2$, $6_3$), a second switch ($8_1$, $8_2$, $8_3$) and a reactor ($10_1$, $10_2$, $10_3$); and
a controller (30) for the active rectifier/inverter (20);
wherein the controller (30) is adapted to determine one or more null values of dc link voltage $V_{1,null}$ with reference to the voltage $V_2$ across the dc load/source according to the equation:

$$V_{1,null} = V_2 \cdot \frac{N}{a}$$

where:

$N$ is a positive integer greater than or equal to 2, and
$a$ is a positive integer less than $N$; and
if a null value of dc link voltage is between the maximum and minimum limits of the dc link voltage, wherein the controller (30) is adapted to control the active rectifier/inverter (20) to provide a dc link voltage that is substantially the same as the null value of dc link voltage.

5. A power converter arrangement according to claim 4, wherein
if there are two or more null values of dc link voltage between the maximum and minimum limits, the controller (30) is further adapted to control the active rectifier/inverter (20) to provide a dc link voltage that is substantially the same as the highest null value.

6. A power converter arrangement according to claim 4 or claim 5, wherein
if no null value of dc link voltage is between the maximum and minimum limits, the controller (30) is further adapted to control the active rectifier/inverter (20) to provide a dc link voltage that is substantially the same as the maximum or minimum limit of the dc link voltage.

Figure 1

PRIOR ART

Figure 2

Figure 3

Figure 4

**EP 2 806 549 A1**

Europäisches Patentamt
European Patent Office
Office européen des brevets

# EUROPEAN SEARCH REPORT

Application Number

EP 13 16 8560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 536 549 A2 (TOSHIBA KK [JP]) 1 June 2005 (2005-06-01) * paragraphs [0004], [0012] - [0024]; figures 1-4 * | 1-6 | INV. H02M3/158 |
| X | US 2004/070283 A1 (MAPLE ROBERT [US]) 15 April 2004 (2004-04-15) * paragraphs [0002], [0004], [0013], [0018], [0019]; figure 3 * | 1-6 | |
| X | FR 2 790 616 A1 (SAGEM [FR]) 8 September 2000 (2000-09-08) * page 9, line 21 - page 10, line 5; figures 2,3 * | 1,4 | |

TECHNICAL FIELDS
SEARCHED     (IPC)

H02M

The present search report has been drawn up for all claims

| Place of search | Date of completion of the search | Examiner |
|---|---|---|
| The Hague | 18 September 2013 | Speiser, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

**ANNEX TO THE EUROPEAN SEARCH REPORT
ON EUROPEAN PATENT APPLICATION NO.**

EP 13 16 8560

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2013

| Patent document cited in search report | | Publication date | Patent family member(s) | | Publication date |
|---|---|---|---|---|---|
| EP 1536549 | A2 | 01-06-2005 | EP 1536549 A2 | | 01-06-2005 |
| | | | JP 2005168106 A | | 23-06-2005 |
| | | | US 2005116695 A1 | | 02-06-2005 |
| US 2004070283 | A1 | 15-04-2004 | NONE | | |
| FR 2790616 | A1 | 08-09-2000 | NONE | | |

EPO FORM P0459

For more details about this annex : see Official Journal of the European Patent Office, No. 12/82